# EUROPEAN PATENT APPLICATION

(11) **EP 4 835 730 A1**
(43) Date of publication of application: **04.11.2026**
(21) Application number: 26174205.0
(22) Date of filing: 23.04.2026
(51) Int. Cl.: G06F 40/166, G06F 40/30, G06F 40/35, G06F 40/44, G06F 40/56, G06F 40/151, G06F 40/216, G06F 40/237, G06F 40/295

(54) **SYSTEMS AND METHODS FOR IMPLEMENTING A KNOWLEDGE SHARING ENGINE BASED ON SPEECH SIGNAL PROCESSING DURING USER INTERFACE SESSIONS**

(30) Priority: 28.04.2025 US 202519192259
(71) Applicant: Capital One Services, LLC, McLean, Virginia 22102 (US)
(72) Inventor: HUANG, Hongyi, McLean, VA 22102 (US); LIU, Bingying, McLean, VA 22102 (US); GUMPINA, Naga Venkata Nooka R, McLean, VA 22102 (US); SHI, Pengcheng, McLean, VA 22102 (US); SINGHAL, Surbhi, McLean, VA 22102 (US)
(74) Representative: Boult Wade Tennant LLP

(57) **Abstract**

Systems and methods for implementing a knowledge sharing engine based on speech signal processing during user interface sessions. For example, the system may, in response to detecting a first short-form phrase, determine whether the first short-form phrase corresponds to one or more labeled short-form phrases. The system may, in response to determining that the first short-form phrase does not correspond to the one or more labeled short-form phrases, determine a first domain corresponding to one or more of the plurality of users. The system may retrieve a first domain profile corresponding to the first domain. The system may generate a first feature input corresponding to the first short-form phrase and the first domain profile.

## Description

### BACKGROUND

Knowledge sharing within an enterprise is often difficult due to a combination of organizational, cultural, and technological factors. Employees may be siloed within departments, lack the time or incentive to document and share insights, or fear losing a competitive edge by giving away valuable expertise. Additionally, the sheer volume and fragmentation of information make it hard to capture, organize, and disseminate knowledge effectively. The rise in video conferencing, while improving remote collaboration, has inadvertently made knowledge sharing more challenging. Meetings held over video calls are typically not recorded, transcribed, or easily searchable, meaning critical information often stays locked within conversations and is lost once the meeting ends. Even when recordings are available, they are time-consuming to review and rarely indexed in a way that makes them accessible or actionable later. Conventional video conferencing tools contribute to this issue by focusing primarily on real-time communication rather than knowledge capture and retrieval. They often lack integrated tools for note-taking, automatic transcription, tagging, or linking discussion points to existing documentation or projects, leading to a disconnect between conversations and the enterprise's broader knowledge base.

### SUMMARY

Moreover, even if knowledge sharing tools were enhanced with features like note-taking, automatic transcription, tagging, or linking, these improvements would still fall short of solving the core issue: the lack of contextual understanding and domain-specific insight embedded in the minds of individual participants. Transcriptions and notes can capture what was said, but not necessarily what was meant, nor the nuanced reasoning, assumptions, or unspoken knowledge that informed the conversation. These tools often reduce rich, complex discussions to surface-level summaries that lack the depth required for true knowledge transfer. Without the broader context-such as the specific problem being addressed, the history behind certain decisions, or the tacit knowledge individuals bring from experience-the recorded content remains incomplete and difficult for others to apply meaningfully. As a result, even well-documented meetings can fail to communicate the real "know-how" that drives innovation and problem-solving within an enterprise. True knowledge sharing requires more than just capturing words; it demands mechanisms for interpreting and contextualizing those words within the relevant domain.

Accordingly, systems and methods are described herein for implementing a knowledge sharing engine based on speech signal processing during user interface sessions. As one example, systems and methods are described herein that mitigate the lack of contextual understanding of knowledge sharing tools. As one example, as opposed to a conventional speech-to-text tool, the system supplements detected phrases with additional domain knowledge prior to generating a feature input that is ingested by one or more models.

Supplementing detected phrases with domain knowledge prior to summarization is technically superior because it allows the system to interpret language in a way that is context-aware, precise, and semantically rich. Unlike conventional speech-to-text tools that transcribe words in isolation, a system that integrates domain knowledge can recognize not just what was said, but what it means within a specific professional or organizational context. By enriching detected phrases with relevant terminology, relationships, and concepts before they are processed by downstream models, the system creates a more informative and structured feature input. This contextualization improves model performance by reducing ambiguity, enhancing relevance, and enabling more accurate summarization and classification. It also leads to more efficient processing, as models can focus on higher-level interpretation rather than spending computational effort resolving meaning from unstructured text. Ultimately, this approach enables more actionable outputs, such as summaries that highlight key decisions, risks, or insights-rather than generic overviews-thereby supporting better knowledge retention and decision-making across the enterprise.

In some aspects, systems and methods for implementing a knowledge sharing engine based on speech signal processing during user interface sessions are described. For example, the system may receive a first audio input during a first user interface session between a plurality of users. The system may generate a first text string based on the first audio input. The system may parse the first text string to detect a first short-form phrase. The system may, in response to detecting the first short-form phrase, determine whether the first short-form phrase corresponds to one or more labeled short-form phrases. The system may, in response to determining that the first short-form phrase does not correspond to the one or more labeled short-form phrases, determine a first domain corresponding to one or more of the plurality of users. The system may retrieve a first domain profile corresponding to the first domain. The system may generate a first feature input corresponding to the first short-form phrase and the first domain profile. The system may input the first feature input into a first model to determine a first labeled short-form phrase for the first short-form phrase. The system may generate a first summary corresponding to the first user interface session based on the first labeled short-form phrase. The system may generate for display, on a user interface, the first summary.

Various other aspects, features, and advantages of the invention will be apparent through the detailed description of the invention and the drawings attached hereto. It is also to be understood that both the foregoing general description and the following detailed description are examples and are not restrictive of the scope of the invention. As used in the specification and in the claims, the singular forms of "a," "an," and "the" include plural referents unless the context clearly dictates otherwise. In addition, as used in the specification and the claims, the term "or" means "and/or" unless the context clearly dictates otherwise. Additionally, as used in the specification, "a portion" refers to a part of, or the entirety of (i.e., the entire portion), a given item (e.g., data) unless the context clearly dictates otherwise.

### BRIEF DESCRIPTION OF THE DRAWINGS

FIG. 1 shows an illustrative diagram for a user interface session, in accordance with one or more embodiments.
FIG. 2A shows an illustrative diagram for a model for a knowledge sharing engine, in accordance with one or more embodiments.
FIG. 2B shows an illustrative diagram for a model for summarization, in accordance with one or more embodiments.
FIG. 3 shows illustrative components for a system used to implement knowledge sharing, in accordance with one or more embodiments.
FIG. 4 shows a flowchart of the steps involved in implementing knowledge sharing, in accordance with one or more embodiments.

### DETAILED DESCRIPTION OF THE DRAWINGS

In the following description, for the purposes of explanation, numerous specific details are set forth in order to provide a thorough understanding of the embodiments of the invention. It will be appreciated, however, by those having skill in the art that the embodiments of the invention may be practiced without these specific details or with an equivalent arrangement. In other cases, well-known structures and devices are shown in block diagram form in order to avoid unnecessarily obscuring the embodiments of the invention.

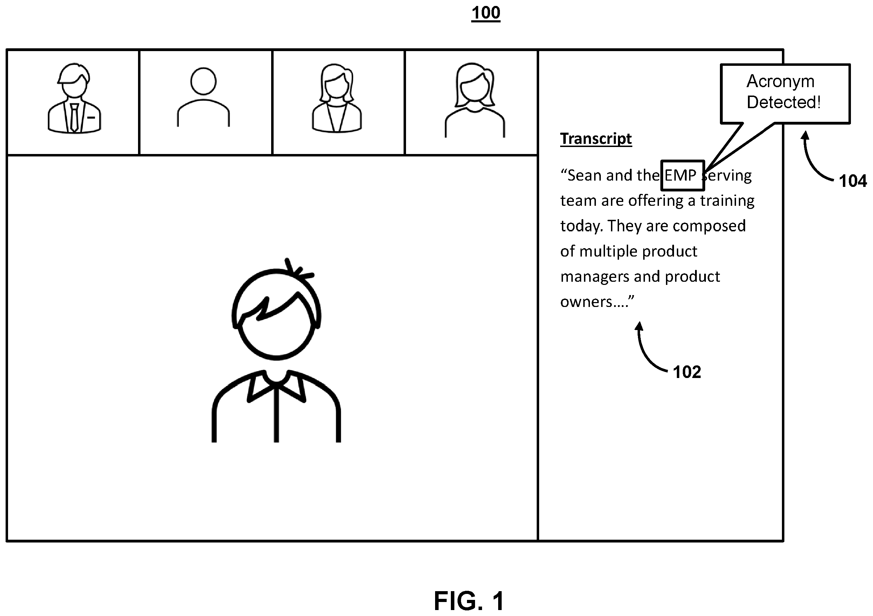

FIG. 1 shows an illustrative diagram for a user interface session, in accordance with one or more embodiments. For example, FIG. 1 shows user interface 100. As described herein, a user interface may comprise a visual and interactive component of a software application, system, or device that enables users to communicate and engage with its underlying functions. It includes all the elements that a user sees and interacts with-such as buttons, menus, icons, text fields, and visual layouts-as well as input methods like touch, mouse clicks, keystrokes, or voice commands. The primary purpose of a user interface is to translate user intentions into system actions and present system responses in a clear, accessible manner. A well-designed user interface focuses on usability, responsiveness, and clarity, ensuring that users can navigate the system efficiently and perform tasks with minimal friction or confusion. In more advanced systems, the user interface may also include personalized content, contextual recommendations, and adaptive features that adjust based on user behavior.

User interface 100 may represent a current user interface session between a plurality of users. As shown, user interface 102 may generate content (e.g., a transcript, summary, and/or other content corresponding to the user interface session). To generate the content, the system may detect a short-form phrase (e.g., acronym 104). For example, user interface 100 may represent a current user interface session between a plurality of users by serving as the central point of interaction through which participants exchange messages, video, audio, or shared content in real time. This interface provides each user with a synchronized view of the session, including communication channels, visual indicators of participant activity, and tools for collaboration. For example, user interface 102, as part of interface 100, may generate content such as a live transcript, a session summary, or contextual recommendations that reflect the ongoing conversation or activity. To generate this content, the system monitors inputs from all participants-such as spoken dialogue, typed chat, or shared documents-and processes them using natural language processing and contextual analysis. During this process, the system may detect short-form phrases, such as acronym 104, and interpret them within the context of the domain or topic being discussed. Recognizing and correctly interpreting these short-form phrases allows the system to enhance the generated content, ensuring it is accurate, meaningful, and tailored to the shared context of the session. This enables the user interface to deliver value-added insights, improve collaboration, and maintain a coherent record of the session.

User interface 100 may show and/or receive various types of content. For example, the type of content that may be generated for display in a user interface includes a wide range of information designed to inform, guide, or prompt user interaction. This content can be informational, such as transaction summaries, notifications, system alerts, or incident reports that present real-time data and system feedback. It can also be interactive, including buttons, dropdown menus, search bars, sliders, and forms that allow users to input or adjust data. Visual elements such as charts, graphs, tables, icons, and status indicators are often used to help users quickly interpret complex information or monitor trends. Additionally, the user interface may generate personalized content, such as recommendations, alerts tailored to user behavior, or adaptive layouts that adjust based on user preferences or device type. Instructional content, like tooltips, onboarding guides, or error messages, is also crucial for guiding users through tasks or troubleshooting issues.

In some embodiments, the content may comprise a text string. For example, a text string may be a sequence of characters used to represent textual information in digital systems. It is comprised of individual elements such as letters, numbers, symbols, and spaces, all arranged in a specific order to convey meaning. Text strings can be as simple as a single word or as complex as full sentences, paragraphs, or code snippets. In programming and data structures, text strings are typically enclosed in quotation marks and treated as a data type that can be manipulated, stored, or displayed. In a user interface, text strings may appear in numerous forms-such as labels on buttons, headings, tooltips, alerts, messages, form field values, and dynamically generated content. They provide essential context for the user, guiding interactions, delivering feedback, or presenting information. For example, a user interface might display the text string "Payment Successful" in a confirmation dialog or show a transaction description like "Monthly Subscription - $9.99" in a financial dashboard. Text strings are central to clear communication in user interfaces, ensuring users understand the system's outputs and available actions.

In some embodiments, the text string may be based on an audio input. For example, an audio input may be a sound-based signal captured by a device, such as a microphone, and processed by a system to perform a specific function-typically involving speech recognition, sound analysis, or voice commands. It is comprised of acoustic waveforms, which are converted into digital signals and often represented as audio files or real-time data streams. These inputs may include spoken words, background noise, music, or any other form of audible sound. In a user interface, audio input may appear in several ways, often accompanied by visual indicators that confirm the system is actively listening or recording. For example, a UI may display a microphone icon that lights up or animates when audio input is being received, or show a live transcription of the spoken words in real time. Some interfaces may also include voice command prompts or options for replaying and editing recorded audio. Audio input enhances user interaction by enabling hands-free control, accessibility features, and natural language communication, making it an important component in voice-enabled applications and systems.

In some embodiments, the user interface may correspond to a user interface session. For example, a user interface session may be a continuous interaction between a user and a software application or system that begins when the user accesses the interface and ends when they log out, close the application, or the session times out due to inactivity. It is comprised of all the activities, inputs, and outputs that occur during that timeframe, including user actions (such as clicks, form submissions, or voice commands), displayed content, and system responses. Each session may be distinguished from another by a unique session identifier, typically assigned by the system at the start of the session. This ID is used to track and isolate the user's specific interaction context, allowing the system to manage personalized content, maintain state (e.g., what page the user is on or what filters they have applied), and ensure secure data handling. Data unique to a user interface session may include the session ID, timestamps, user preferences, temporary selections, authentication tokens, and activity logs. This session-specific data enables the system to provide a seamless and personalized user experience while also supporting analytics, debugging, and security monitoring.

In some embodiments, a group chat or group video session may be considered a user interface session because it represents a distinct period of active interaction between users and a communication platform through its interface. During such a session, participants engage in real-time messaging, voice, or video communication, all facilitated through visible and interactive UI elements like chat windows, participant lists, mute buttons, video feeds, and shared content panels. The session begins when a user joins the group chat or video call and ends when they leave or the session is terminated. It is treated as a single interface session because all actions-such as sending messages, adjusting audio/video settings, or responding to notifications-are tied to the user's continuous engagement with the interface. Each group session may be distinguished by a unique session ID or meeting link, and user-specific session data such as join time, message history, device settings, or speaking activity may be recorded to personalize the experience, maintain state, and support features like real-time collaboration, moderation, and analytics.

In some embodiments, the system may detect a short-form phrase (e.g., an abbreviation, acronym, and/or other context-laden character). For example, a short-form phrase-such as an abbreviation, acronym, or other context-laden character string-is a condensed form of one or more words that conveys meaning using fewer characters. These phrases are often used for efficiency, especially in technical, professional, or informal communication. Examples include "VPN" for Virtual Private Network, "ETA" for Estimated Time of Arrival, or symbols like "@" to denote a user or location. Each short-form phrase can be distinguished from another based on its specific character sequence and the context in which it appears. Detection of a short-form phrase typically involves natural language processing (NLP) or pattern-matching techniques. Systems may use dictionaries of known acronyms and abbreviations, regular expressions, or machine learning models trained on contextual data to identify and interpret these phrases accurately. Additionally, the surrounding words and sentence structure help disambiguate meanings-such as distinguishing "AI" as Artificial Intelligence versus Adobe Illustrator-by evaluating how the phrase is used in context.

In some embodiments, the system may determine a domain for use in interpreting a short-form phrase. For example, a domain may refer to a specific area of knowledge, function, or control within a system or organization, and it can take on various forms depending on context. For example, in an enterprise setting, a domain might represent a user role such as "finance," "engineering," or "customer support," each with its own terminology and workflows. In computing, a domain can refer to a networked environment governed by a centralized directory service, such as a Windows Active Directory domain, which defines user access and resource permissions. Domains may also represent broader areas of expertise, such as legal, medical, or cybersecurity fields. When interpreting a short-form phrase-such as an acronym or abbreviation-the domain provides essential context that helps determine the correct meaning. For instance, the acronym "RAM" in a hardware domain refers to Random Access Memory, while in a business role related to customer management, it might mean Relationship Account Manager. By associating the phrase with the appropriate domain, a system can disambiguate meanings and deliver more accurate interpretations, improving the reliability of natural language processing, user interfaces, and recommendation systems.

In some embodiments, the system may determine a domain profile corresponding to the domain. For example, a domain profile may be a collection of characteristics, attributes, or metadata that collectively define the operational context, behavior, and linguistic patterns associated with a specific domain. It serves as a structured representation of what is typical or expected within that domain, enabling systems to make more accurate interpretations and decisions. For example, in a cybersecurity domain, a domain profile might include characteristics such as terminology (e.g., "DDoS," "phishing"), typical data types (IP addresses, log files), threat patterns, and user roles like analysts or administrators. In a medical domain, the profile may include medical jargon, common acronyms (e.g., "BP" for blood pressure), document formats (like clinical notes), and roles such as physician, nurse, or patient. In a customer service domain, the profile might contain conversational patterns, complaint categories, sentiment cues, and terms like "ticket" or "resolution."

The system can determine a domain profile corresponding to a domain by analyzing available data sources, user behavior, and interaction history. This can involve identifying keywords, monitoring activity patterns, and leveraging user roles or access permissions to infer the domain. Machine learning models, clustering techniques, or rule-based logic can also be used to classify data and construct or retrieve a matching domain profile. Once established, the domain profile helps guide language interpretation, short-form phrase resolution, user intent recognition, and system recommendations by anchoring them in the appropriate contextual framework.

**In** some embodiments, the system may generate content (e.g., a summary, a recommendation, etc.) corresponding to the user interface session. For example, a system may generate content-such as a summary, recommendation, or alert-corresponding to a user interface session by continuously monitoring and analyzing the user's actions, inputs, and contextual data throughout the session. As the session progresses, the system captures relevant interaction details, such as selected options, viewed content, entered text, navigation paths, or spoken commands. This data is then processed using natural language processing (NLP), machine learning models, or rule-based logic to extract meaningful insights. For example, if a user interacts with multiple financial transactions during a session, the system may generate a summary highlighting spending patterns or flag unusual activity. If the user is participating in a group video session about cybersecurity, the system might generate a recommendation based on the discussed topics or detected concerns. The generated content is tailored to the session's domain, the user's role, and the specific context, ensuring relevance and clarity. Finally, the content is formatted for display and integrated into the user interface, appearing in real time or at the end of the session to enhance user understanding, streamline decisions, or prompt further actions.

**In** some embodiments, the system may receive a first audio input during a first user interface session between a plurality of users. The system may generate a first text string based on applying a first speech signal processing algorithm to the first audio input. The system may parse the first text string to detect a first linguistic acronym. For example, the system may detect a linguistic acronym by first processing the audio input received during a user interface session. For example, when the system receives a first audio input during a session between a plurality of users, it begins by applying a first speech signal processing algorithm-such as automatic speech recognition (ASR)-to convert the spoken words into a first text string. This conversion captures the phonetic content of the conversation and transcribes it into readable text. Once the text string is generated, the system parses it using natural language processing techniques to identify linguistic patterns indicative of acronyms. This involves scanning for sequences of uppercase letters, abbreviations, or known acronyms within a predefined or domain-specific lexicon. Additionally, the system may use contextual cues from surrounding words to help confirm that a detected term is indeed a linguistic acronym and not a coincidental word sequence. For example, if the transcribed sentence includes "We'll use the API for integration," the system identifies "API" as a likely acronym for "Application Programming Interface" based on both its formatting and context. This detection enables further processing, such as expanding the acronym, linking it to relevant domain knowledge, or including it in a transcript or summary of the session.

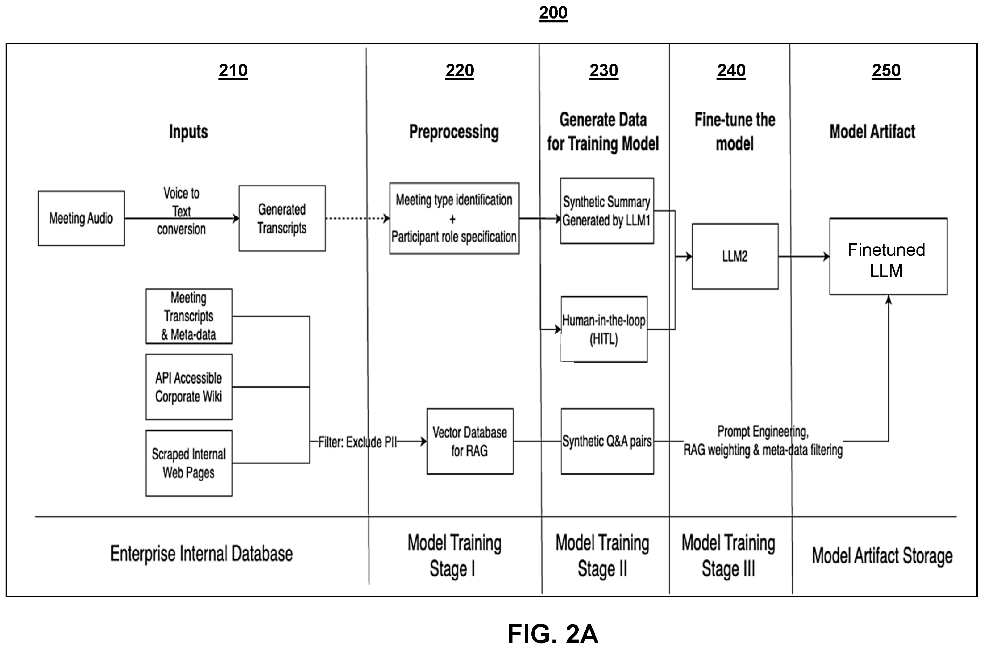

FIG. 2A shows an illustrative diagram for a model for a knowledge sharing engine, in accordance with one or more embodiments. For example, FIG. 2A shows architecture 200 for a model for a knowledge sharing engine. Architecture 200 shows a multi-stage pipeline for developing a domain-specific AI model focused on meeting summarization and question-answering capabilities. At point 210, the process may begin within an enterprise internal database, where various raw data sources are collected. One input may be meeting audio, which is processed using a voice-to-text conversion tool to generate transcripts. These transcripts form the core textual input for downstream processing. In addition to audio-based transcripts, the system may also ingest a variety of other enterprise documents, such as meeting transcripts with metadata, API-accessible corporate wikis that might include internal policies or technical documentation, and scraped internal web pages, which could contain product documentation, HR FAQs, or support manuals. All of these textual resources may be filtered to exclude personally identifiable information (PII) to ensure data privacy and compliance with internal data governance policies by the system. The sanitized content may be then stored in a vector database that supports retrieval-augmented generation (RAG).

At point 220 (e.g., Model Training Stage I), the preprocessing pipeline enhances the raw transcripts by identifying meeting types (e.g., sprint planning, client onboarding, security review) and participant roles (e.g., presenter, note-taker, project manager, engineer). These annotations provide structural context that helps the model better understand who said what and in what setting-important for distinguishing between action items, decisions, and general discussion. This enriched data is then passed to point 230 (e.g., Model Training Stage II), where the system generates training data. Using a first language model (LLM1), the system may automatically create synthetic summaries of the meetings, capturing highlights such as project status updates, technical blockers, or budget discussions. To improve the quality of these outputs, a human-in-the-loop (HITL) process may be included, where domain experts review and refine the summaries, ensuring they are accurate and aligned with enterprise standards. In parallel, the system may also generate synthetic question-and-answer (Q&A) pairs, which might cover common inquiries such as "What are the next steps discussed?" or "Who is responsible for delivering the report by Friday?"-questions that train the model for downstream conversational use cases.

At point 240 (e.g., Model Training Stage III), a second language model (LLM2) is fine-tuned using the synthetic summaries and Q&A pairs. This stage may incorporate advanced techniques such as prompt engineering to guide model behavior, RAG weighting to optimize the retrieval of relevant context from the vector database, and metadata filtering to ensure that only high-quality, contextually rich inputs are used during training. The result of this stage may be a fine-tuned model, which may be optimized for enterprise-specific summarization and Q&A tasks at point 240.

At point 250, (e.g., a Model Artifact Storage phase), the trained model is saved and made available as a Finetuned LLM2. This artifact can be deployed across enterprise tools-such as internal meeting assistants, knowledge management systems, or chatbot interfaces-to automatically generate actionable meeting summaries, answer employee questions, and support efficient knowledge retrieval. By combining structured internal data, synthetic generation, human oversight, and domain-aware fine-tuning, the system ensures that the final AI model delivers high accuracy, contextual relevance, and enterprise-grade performance.

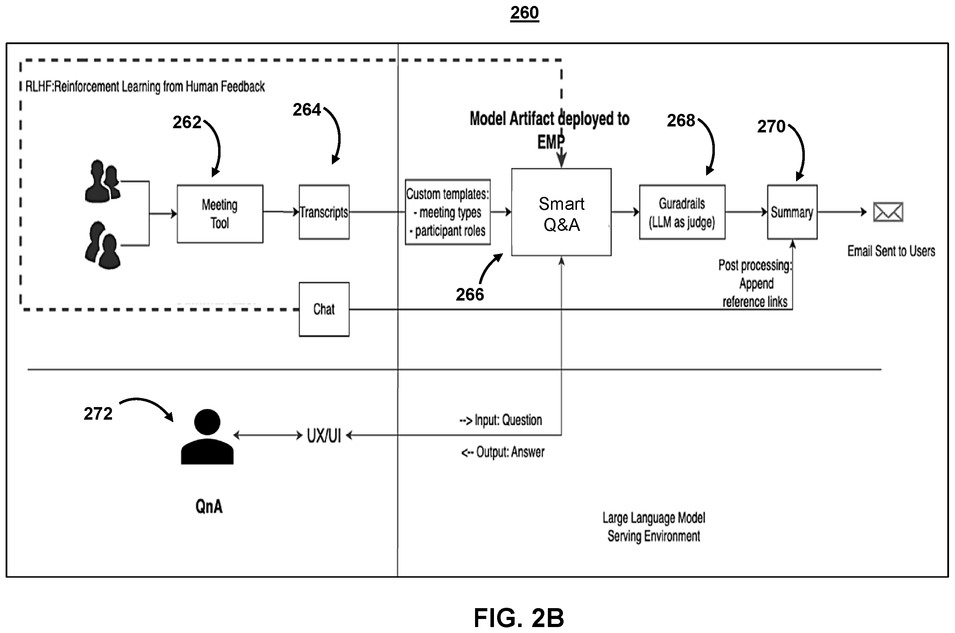

FIG. 2B shows an illustrative diagram for a model for summarization, in accordance with one or more embodiments. For example, FIG. 2B shows diagram 260 for a knowledge sharing engine. For example, diagram 260 shows how a system may deploy and operationalize a trained AI model within an enterprise environment to perform automated summarization and question-answering (Q&A) tasks. The process may begin with a Meeting Tool (e.g., tool 262), which facilitates real-time or recorded conversations between multiple users. These conversations are transcribed into text, generating meeting transcripts. These transcripts serve as the core input to the model, an intelligent summarization module integrated into the enterprise's workflow.

The system may enhance these transcripts using custom templates (e.g., templates 264) that factor in meeting types (e.g., daily stand-ups, quarterly reviews, or incident response calls) and participant roles (e.g., speaker, note-taker, team lead). These templates allow the system to adjust the summarization style and content prioritization-for example, emphasizing decision points and deadlines in project planning meetings, or highlighting risks and action items in security reviews.

The processed transcripts are then passed to the model artifact (e.g., artifact 266), which may have been previously trained and deployed into an enterprise model platform (EMP). The artifact may integrate summarization capabilities with Q&A features. The system may leverage guardrails (e.g., guardrail 268), implemented using a language model acting as a judge, to evaluate the quality, factual consistency, and tone of the generated summary before final output. This ensures the summaries are enterprise-safe, non-biased, and contextually accurate. For instance, guardrails may prevent summarization of speculative or sensitive discussions not meant for wide distribution.

**In** the final post-processing stage (e.g., stage 270), the system appends reference links-such as timestamps, original transcript anchors, or links to relevant internal documentation-enhancing the traceability and usefulness of the summary. The completed summary is then formatted and emailed to users, ensuring that all meeting participants and stakeholders receive a concise, curated recap of the conversation.

Simultaneously, a separate QnA interface (e.g., interface 272) allows users to interact with the model through a UX/UI layer. A user can ask natural language questions like "Who was assigned the next sprint task?" or "What was the decision on the budget increase?" The system routes these questions to the same deployed model, which uses the transcript and additional context from the vector database to retrieve or generate accurate, context-specific answers.

Notably, the entire system benefits from Reinforcement Learning from Human Feedback (RLHF), where user corrections and feedback are continuously incorporated to fine-tune the model's behavior. For example, if a user flags a summary as incomplete or incorrect, that feedback can be used to adjust the model's weights or prompt structure during future deployments.

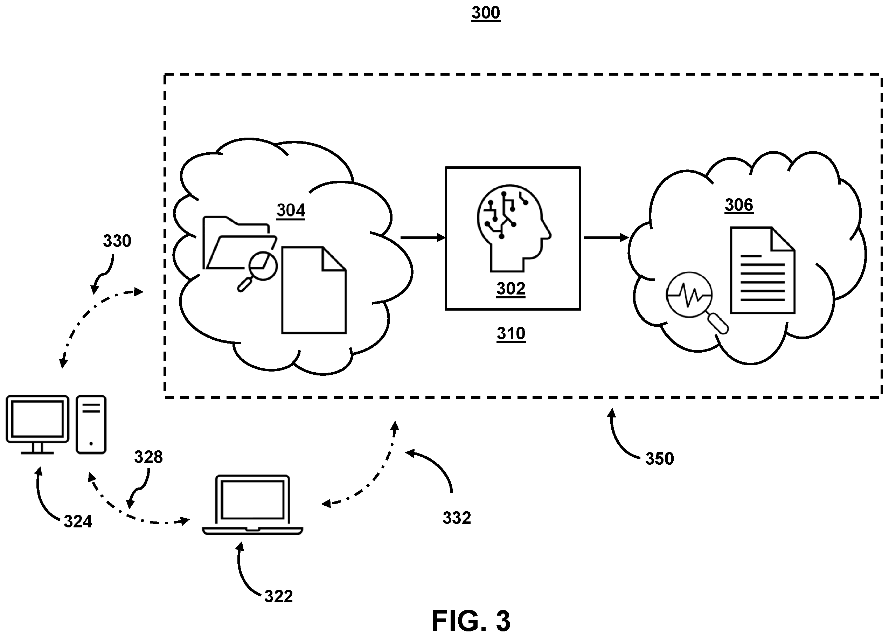

FIG. 3 shows illustrative components for a system used to implement knowledge sharing, in accordance with one or more embodiments. For example, FIG. 3 may show illustrative components for implementing knowledge sharing. As shown in FIG. 3, system 300 may include mobile device 322 and user terminal 324. While shown as a smartphone and personal computer, respectively, in FIG. 3, it should be noted that mobile device 322 and user terminal 324 may be any computing device, including, but not limited to, a laptop computer, a tablet computer, a hand-held computer, and other computer equipment (e.g., a server), including "smart," wireless, wearable, and/or mobile devices. FIG. 3 also includes cloud components 310. Cloud components 310 may alternatively be any computing device as described above, and may include any type of mobile terminal, fixed terminal, or other device. For example, cloud components 310 may be implemented as a cloud computing system, and may feature one or more component devices. It should also be noted that system 300 is not limited to three devices. Users may, for instance, utilize one or more devices to interact with one another, one or more servers, or other components of system 300. It should be noted, that, while one or more operations are described herein as being performed by particular components of system 300, these operations may, in some embodiments, be performed by other components of system 300. As an example, while one or more operations are described herein as being performed by components of mobile device 322, these operations may, in some embodiments, be performed by components of cloud components 310. In some embodiments, the various computers and systems described herein may include one or more computing devices that are programmed to perform the described functions. Additionally, or alternatively, multiple users may interact with system 300 and/or one or more components of system 300. For example, in one embodiment, a first user and a second user may interact with system 300 using two different components.

With respect to the components of mobile device 322, user terminal 324, and cloud components 310, each of these devices may receive content and data via input/output (hereinafter "I/O") paths. Each of these devices may also include processors and/or control circuitry to send and receive commands, requests, and other suitable data using the I/O paths. The control circuitry may comprise any suitable processing, storage, and/or input/output circuitry. Each of these devices may also include a user input interface and/or user output interface (e.g., a display) for use in receiving and displaying data. For example, as shown in FIG. 3, both mobile device 322 and user terminal 324 include a display upon which to display data (e.g., conversational response, queries, and/or notifications).

Additionally, as mobile device 322 and user terminal 324 are shown as touchscreen smartphones, these displays also act as user input interfaces. It should be noted that in some embodiments, the devices may have neither user input interfaces nor displays, and may instead receive and display content using another device (e.g., a dedicated display device such as a computer screen, and/or a dedicated input device such as a remote control, mouse, voice input, etc.). Additionally, the devices in system 300 may run an application (or another suitable program). The application may cause the processors and/or control circuitry to perform operations related to generating dynamic conversational replies, queries, and/or notifications.

Each of these devices may also include electronic storages. The electronic storages may include non-transitory storage media that electronically stores information. The electronic storage media of the electronic storages may include one or both of (i) system storage that is provided integrally (e.g., substantially non-removable) with servers or client devices, or (ii) removable storage that is removably connectable to the servers or client devices via, for example, a port (e.g., a USB port, a firewire port, etc.) or a drive (e.g., a disk drive, etc.). The electronic storages may include one or more of optically readable storage media (e.g., optical disks, etc.), magnetically readable storage media (e.g., magnetic tape, magnetic hard drive, floppy drive, etc.), electrical charge-based storage media (e.g., EEPROM, RAM, etc.), solid-state storage media (e.g., flash drive, etc.), and/or other electronically readable storage media. The electronic storages may include one or more virtual storage resources (e.g., cloud storage, a virtual private network, and/or other virtual storage resources). The electronic storages may store software algorithms, information determined by the processors, information obtained from servers, information obtained from client devices, or other information that enables the functionality as described herein.

In some embodiments, system 300 and/or one or more models herein may be implemented using an application specific integrated circuit. An integrated circuit may be a small electronic device made of semiconductor material, typically silicon, that contains a large number of microscopic electronic components such as transistors, resistors, capacitors, and diodes. These components are interconnected to perform a specific function or set of functions. Integrated circuits can be classified into various types based on their functionality, such as analog, digital, and mixed-signal ICs. The transistors within an IC are the primary building blocks, as they act as switches or amplifiers for electronic signals. The other components, like resistors and capacitors, are used for controlling voltage, current, and timing within the circuit. System 300 may design the integrated circuit to be application specific such that design of the circuit is customized for a given application. In some embodiments, system 300 may use an integrated circuit system where one or more integrated circuit are spread throughout a system, network, and/or one or more devices. In such case, the system design may ensure that the circuits are integrated with other electronic components like connectors, power supplies, and sensors to form a complete and functional electronic system. This integration allows for the implementation of sophisticated tasks in devices needed for one or more specified applications.

FIG. 3 also includes communication paths 328, 330, and 332. Communication paths 328, 330, and 332 may include the Internet, a mobile phone network, a mobile voice or data network (e.g., a 5G or LTE network), a cable network, a public switched telephone network, or other types of communications networks or combinations of communications networks. Communication paths 328, 330, and 332 may separately or together include one or more communications paths, such as a satellite path, a fiber-optic path, a cable path, a path that supports Internet communications (e.g., IPTV), free-space connections (e.g., for broadcast or other wireless signals), or any other suitable wired or wireless communications path or combination of such paths. The computing devices may include additional communication paths linking a plurality of hardware, software, and/or firmware components operating together. For example, the computing devices may be implemented by a cloud of computing platforms operating together as the computing devices.

Cloud components 310 may include model 302, which may be a machine learning model, artificial intelligence model, etc. (which may be referred collectively as "models" herein). In recent years, the use of artificial intelligence, including, but not limited to, machine learning, deep learning, etc. (referred to collectively herein as artificial intelligence models, machine learning models, or simply models) has exponentially increased. Broadly described, artificial intelligence refers to a wide-ranging branch of computer science concerned with building smart machines capable of performing tasks that typically require human intelligence. Key benefits of artificial intelligence are its ability to process data, find underlying patterns, and/or perform real-time determinations. However, despite these benefits and despite the wide-ranging number of potential applications, practical implementations of artificial intelligence have been hindered by several technical problems. First, artificial intelligence may rely on large amounts of high-quality data. The process for obtaining this data and ensuring it is high-quality can be complex and time-consuming. Additionally, data that is obtained may need to be categorized and labeled accurately, which can be difficult, time-consuming and a manual task. Second, despite the mainstream popularity of artificial intelligence, practical implementations of artificial intelligence may require specialized knowledge to design, program, and integrate artificial intelligence-based solutions, which can limit the amount of people and resources available to create these practical implementations. Finally, results based on artificial intelligence can be difficult to review as the process by which the results are made may be unknown or obscured. This obscurity can create hurdles for identifying errors in the results, as well as improving the models providing the results.

Model 302 may take inputs 304 and provide outputs 306. The inputs may include multiple datasets, such as a training dataset and a test dataset. Each of the plurality of datasets (e.g., inputs 304) may include data subsets related to user data, predicted forecasts and/or errors, and/or actual forecasts and/or errors. In some embodiments, outputs 306 may be fed back to model 302 as input to train model 302 (e.g., alone or in conjunction with user indications of the accuracy of outputs 306, labels associated with the inputs, or with other reference feedback information). For example, the system may receive a first labeled feature input, wherein the first labeled feature input is labeled with a known prediction for the first labeled feature input. The system may then train the first machine learning model to classify the first labeled feature input with the known prediction (e.g., short-form phrase, a label or a short-form phrase, whether a short-form phrase corresponds to a labeled short-form phrase, etc.).

**In** a variety of embodiments, model 302 may update its configurations (e.g., weights, biases, or other parameters) based on the assessment of its prediction (e.g., outputs 306) and reference feedback information (e.g., user indication of accuracy, reference labels, or other information). In a variety of embodiments, where model 302 is a neural network, connection weights may be adjusted to reconcile differences between the neural network's prediction and reference feedback. In a further use case, one or more neurons (or nodes) of the neural network may require that their respective errors are sent backward through the neural network to facilitate the update process (e.g., backpropagation of error). Updates to the connection weights may, for example, be reflective of the magnitude of error propagated backward after a forward pass has been completed. In this way, for example, the model 302 may be trained to generate better predictions.

**In** some embodiments, model 302 may include an artificial neural network. In such embodiments, model 302 may include an input layer and one or more hidden layers. Each neural unit of model 302 may be connected with many other neural units of model 302. Such connections can be enforcing or inhibitory in their effect on the activation state of connected neural units. In some embodiments, each individual neural unit may have a summation function that combines the values of all of its inputs. In some embodiments, each connection (or the neural unit itself) may have a threshold function such that the signal must surpass it before it propagates to other neural units. Model 302 may be self-learning and trained, rather than explicitly programmed, and can perform significantly better in certain areas of problem solving, as compared to traditional computer programs. During training, an output layer of model 302 may correspond to a classification of model 302, and an input known to correspond to that classification may be input into an input layer of model 302 during training. During testing, an input without a known classification may be input into the input layer, and a determined classification may be output.

**In** some embodiments, model 302 may include multiple layers (e.g., where a signal path traverses from front layers to back layers). In some embodiments, back propagation techniques may be utilized by model 302 where forward stimulation is used to reset weights on the "front" neural units. In some embodiments, stimulation and inhibition for model 302 may be more free-flowing, with connections interacting in a more chaotic and complex fashion. During testing, an output layer of model 302 may indicate whether or not a given input corresponds to a classification of model 302 (e.g., short-form phrase, a label or a short-form phrase, whether a short-form phrase corresponds to a labeled short-form phrase, etc.).

**In** some embodiments, the model (e.g., model 302) may automatically perform actions based on outputs 306. In some embodiments, the model (e.g., model 302) may not perform any actions. The output of the model (e.g., model 302) may be used to generate a summary of a user interface session.

In some embodiments, the system may generate predictions related to financial services. For example, the system may use one or more models and/or application to process a variety of data to generate predictions for tasks such as payment card eligibility determinations, fraud detection, and/or determining rates for auto-finance applications. For credit card eligibility, the model may use data such as the applicant's credit score, income, employment history, debt-to-income ratio, and past credit history. This data helps the model predict the likelihood of the applicant repaying the credit card debt. For fraud detection, models analyze transaction data, including the amount, location, frequency, and pattern of transactions. They compare these patterns to known fraudulent behavior to identify potentially fraudulent activities. For determining auto-finance rates, models might use the applicant's credit score, loan amount, loan term, vehicle details, and market interest rates. The data used by these models comes from various sources, including credit bureaus, financial institutions, customer-provided information, transaction records, and public records. By analyzing these data points, models can make informed predictions and decisions that help financial institutions manage risk, provide appropriate services, and enhance customer satisfaction.

In some embodiments, the model may process received data through several stages. For example, the model may collect and aggregate data from various sources (e.g., a user account, industry data, third-party data sources, etc.). The system may ensure the data is cleaned and preprocessed to handle any missing and/or inconsistent information. This preprocessing may include normalizing numerical data, encoding categorical variables, and applying techniques to handle outliers. The model may then use feature engineering to identify and create relevant features that can improve its predictive power. For instance, the system may derive new variables from existing ones, such as calculating the debt-to-income ratio from debt and income data.

Once the data is prepared, the system feeds the data into the model, which could be an artificial intelligence algorithm such as logistic regression, decision trees, and/or neural networks. The model may be trained on historical data, learning patterns, and/or relationships between input features and the target outcomes. During this training process, the system may adjust the model parameters to minimize prediction errors. After training, the system may validate the model and test the model using separate data sets to ensure the model has a predetermined and/or threshold accuracy and generalizability.

In some embodiments, the system may use specialized predictions based on the task. Additionally or alternatively, the system may adjust the inputs and/or outputs based on the determinations and/or predictions required. For example, for credit card eligibility, the model may evaluate the applicant's likelihood of defaulting on payments. In fraud detection, the model may identify anomalies and patterns indicative of fraudulent behavior. In auto-finance rate determination, the model may predict the risk associated with lending to an individual and adjusts the interest rates accordingly. In some embodiments, the entire process may be iterative, with models continually updated and refined as new data becomes available, ensuring they remain effective in making accurate and reliable predictions.

System 300 also includes API layer 350. API layer 350 may allow the system to generate summaries across different devices. In some embodiments, API layer 350 may be implemented on mobile device 322 or user terminal 324. Alternatively or additionally, API layer 350 may reside on one or more of cloud components 310. API layer 350 (which may be A REST or Web services API layer) may provide a decoupled interface to data and/or functionality of one or more applications. API layer 350 may provide a common, language-agnostic way of interacting with an application. Web services APIs offer a well-defined contract, called WSDL, that describes the services in terms of its operations and the data types used to exchange information. REST APIs do not typically have this contract; instead, they are documented with client libraries for most common languages, including Ruby, Java, PHP, and JavaScript. SOAP Web services have traditionally been adopted in the enterprise for publishing internal services, as well as for exchanging information with partners in B2B transactions.

API layer 350 may use various architectural arrangements. For example, system 300 may be partially based on API layer 350, such that there is strong adoption of SOAP and RESTful Web-services, using resources like Service Repository and Developer Portal, but with low governance, standardization, and separation of concerns. Alternatively, system 300 may be fully based on API layer 350, such that separation of concerns between layers like API layer 350, services, and applications are in place.

In some embodiments, the system architecture may use a microservice approach. Such systems may use two types of layers: Front-End Layer and Back-End Layer where microservices reside. In this kind of architecture, the role of the API layer 350 may provide integration between Front-End and Back-End. In such cases, API layer 350 may use RESTful APIs (exposition to front-end or even communication between microservices). API layer 350 may use AMQP (e.g., Kafka, RabbitMQ, etc.). API layer 350 may use incipient usage of new communications protocols such as gRPC, Thrift, etc.

In some embodiments, the system architecture may use an open API approach. In such cases, API layer 350 may use commercial or open source API Platforms and their modules. API layer 350 may use a developer portal. API layer 350 may use strong security constraints applying WAF and DDoS protection, and API layer 350 may use RESTful APIs as standard for external integration.

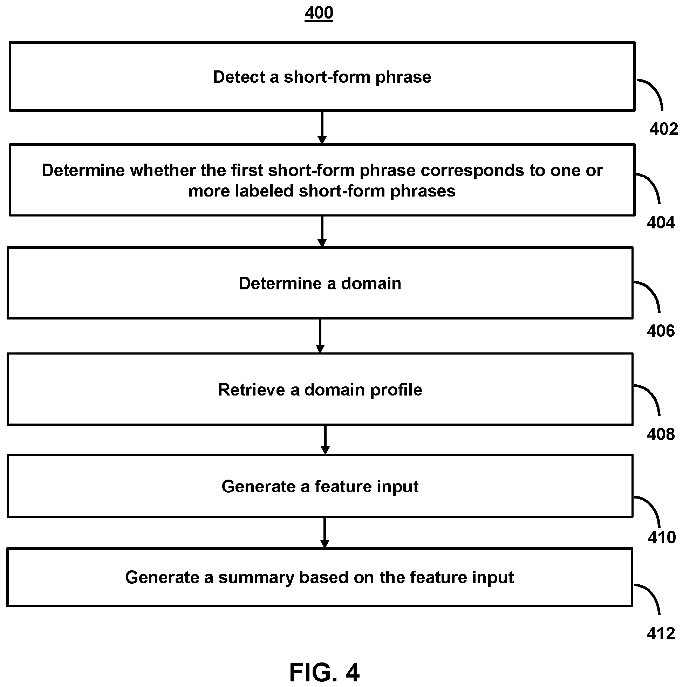

FIG. 4 shows a flowchart of the steps involved in implementing knowledge sharing, in accordance with one or more embodiments. For example, the system may use process 400 (e.g., as implemented on one or more system components described above) in order to implement a knowledge sharing engine based on speech signal processing during user interface sessions.

At step 402, process 400 (e.g., using one or more components described above) detects a short-form phrase. For example, the system may receive a first audio input during a first user interface session between a plurality of users, generate a first text string based on the first audio input, and parse the first text string to detect a first short-form phrase. For example, the system may detect a short-form phrase by analyzing spoken or written content for condensed expressions commonly used in specific domains or conversational contexts. For example, during a first user interface session between a plurality of users, the system may receive a first audio input and convert it into a first text string using a speech-to-text engine or another speech signal processing algorithm. Once the spoken content is transcribed into text, the system parses the text string to detect a first short-form phrase-such as an abbreviation, acronym, or symbolic reference (e.g., "ETA," "CPU," or "@user"). This detection involves scanning for linguistic patterns like all-uppercase sequences, known abbreviations from a domain-specific dictionary, or symbols that carry meaning depending on their context. The system may also use contextual analysis to distinguish short-form phrases from regular words, identifying how they are used in relation to other terms. For example, if the phrase "ETA" appears near words like "arrival" or "expected," the system can infer that it refers to "Estimated Time of Arrival." By accurately detecting these short-form phrases, the system can enrich summaries, improve transcript clarity, and support more nuanced recommendations or follow-up actions during or after the session.

At step 404, process 400 (e.g., using one or more components described above) determines whether the first short-form phrase corresponds to one or more labeled short-form phrases. For example, the system may, in response to detecting the first short-form phrase, determine whether the first short-form phrase corresponds to one or more labeled short-form phrases. In response to detecting the first short-form phrase, the system may determine whether it corresponds to one or more labeled short-form phrases by comparing it against a reference database or knowledge base that contains known short-form phrases and their associated meanings or labels. Once the system identifies a potential short-form phrase-such as an acronym or abbreviation-it performs a lookup to see if the phrase matches any entries in the labeled dataset. These labeled short-form phrases may be domain-specific and include metadata such as full expansions, usage examples, and contextual associations. The system can enhance this matching process by considering the context in which the short-form phrase was used, analyzing surrounding words, speaker roles, or the topic of discussion to improve accuracy. For instance, the phrase "AI" could be interpreted as "Artificial Intelligence" in a technology domain or "Appreciation Index" in finance. The system may use natural language processing techniques and domain profiles to assess this context and confirm whether the detected phrase aligns with one or more labeled entries. If a match is found, the system associates the short-form phrase with its label, enabling it to be accurately interpreted, expanded, or used in generating summaries, recommendations, or other interface content.

In some embodiments, the system may determine whether the first short-form phrase corresponds to the one or more labeled short-form phrases by parsing a second text string to detect a second short-form phrase, determining whether the second short-form phrase corresponds to the first short-form phrase, and, in response to determining that the second short-form phrase corresponds to the first short-form phrase, determining whether the second short-form phrase corresponds to the one or more labeled short-form phrases. For example, the system may determine whether the first short-form phrase corresponds to one or more labeled short-form phrases by leveraging additional contextual data, such as a second text string, to support disambiguation and validation. After detecting the first short-form phrase in a primary text string, the system may parse a second text string-either from a different part of the conversation, a related document, or another user's input during the same session-to detect a second short-form phrase. The system then compares the second short-form phrase to the first to determine whether they are equivalent or closely related, using techniques such as string matching, contextual analysis, or semantic similarity scoring. If the system determines that the second short-form phrase corresponds to the first-for example, if both are instances of "NLP" used in slightly different sentence structures-it treats the second occurrence as corroborating evidence. The system then checks whether this second short-form phrase matches any entries in the labeled dataset of known phrases. If a match is found, it infers that the first short-form phrase also corresponds to the same labeled entry. This process strengthens the system's confidence in the interpretation by validating the phrase across multiple instances or contexts, reducing the chance of misclassification and enabling more accurate content generation, such as summaries or recommendations.

In some embodiments, the system may determine whether the first short-form phrase corresponds to the one or more labeled short-form phrases by parsing a second text string to detect a context for the first short-form phrase, generating a contextual short-form phrase based on the second text string and the first short-form phrase, and determining whether the contextual short-form phrase corresponds to the one or more labeled short-form phrases. For example, the system may determine whether the first short-form phrase corresponds to one or more labeled short-form phrases by leveraging context from a second text string. After detecting the first short-form phrase in a primary text string, the system parses a second text string-such as an adjacent sentence, related conversation segment, or supporting document-to identify contextual information relevant to the short-form phrase. This context may include domain-specific terminology, topic indicators, or descriptive language that helps clarify the intended meaning of the short-form phrase. Using this context, the system generates a contextual short-form phrase, which combines the original phrase with its inferred meaning or domain usage. For example, if the first short-form phrase is "RAM" and the second text string includes terms like "memory upgrade," "hardware," or "system performance," the system may generate a contextual short-form phrase like "RAM (Random Access Memory)." It then compares this contextual version against a repository of labeled short-form phrases to determine whether it corresponds to a known entry. If a match is found, the system confirms the meaning of the first short-form phrase with greater accuracy, enabling it to produce clearer interpretations, summaries, or recommendations that align with the user's intent and the session's domain.

In some embodiments, the system may determine whether the first short-form phrase corresponds to the one or more labeled short-form phrases by parsing a second text string to detect a context for the first short-form phrase, generating a contextual short-form phrase based on the second text string and the first short-form phrase, and determining whether the contextual short-form phrase corresponds to the one or more labeled short-form phrases. For example, the system may determine whether the first short-form phrase corresponds to one or more labeled short-form phrases by incorporating contextual understanding derived from a second text string. After detecting the first short-form phrase-such as an acronym or abbreviation-in a primary text string, the system parses a second text string, which may originate from surrounding dialogue, related documentation, or another segment within the same session. The purpose of parsing this second text string is to identify contextual cues-such as associated terms, domain-specific language, or descriptive phrases-that can clarify the intended meaning of the short-form phrase. Based on this analysis, the system generates a contextual short-form phrase by combining the original short-form phrase with its inferred meaning derived from the detected context. For example, if the first short-form phrase is "API" and the second text string contains words like "developer access," "integration," or "endpoints," the system may generate the contextual short-form phrase "API (Application Programming Interface)." It then compares this contextual version against a set of labeled short-form phrases stored in a reference dataset or knowledge base. If the contextual short-form phrase matches one or more labeled entries, the system concludes that the original phrase corresponds to the identified label, increasing confidence in its interpretation and enabling accurate downstream processing such as content generation, summarization, or decision support.

In some embodiments, the system may determine whether the first short-form phrase corresponds to the one or more labeled short-form phrases by determining a first relevance of the first short-form phrase to the first user interface session, comparing the first relevance to a threshold relevance, and determining to compare the first short-form phrase corresponds to the one or more labeled short-form phrases based on the first relevance to the threshold relevance. For example, the system may determine whether the first short-form phrase corresponds to one or more labeled short-form phrases by first assessing the relevance of that phrase to the context of the ongoing user interface session. This process begins by evaluating how closely the short-form phrase aligns with the topics, domain, or participant roles active in the session. For example, the system may analyze session metadata, prior utterances, user roles, or conversation trends to calculate a first relevance score for the short-form phrase. This score reflects how likely the phrase is to be meaningful or contextually important within the current session. The system then compares this relevance score to a threshold relevance value, which represents the minimum importance required to justify further processing, such as disambiguation or expansion. If the first relevance meets or exceeds the threshold, the system proceeds to compare the short-form phrase against a database of labeled short-form phrases to determine whether a match exists. This selective approach helps the system focus its computational resources on phrases that are contextually significant, avoiding unnecessary lookups or misinterpretations of incidental or out-of-context abbreviations, thereby improving efficiency and accuracy in content generation and user interface interaction.

In some embodiments, the system may determine whether the first short-form phrase corresponds to the one or more labeled short-form phrases by updating the one or more labeled short-form phrases to include the first labeled short-form phrase and assigning the first labeled short-form phrase to the first short-form phrase. For example, the system may determine whether the first short-form phrase corresponds to one or more labeled short-form phrases by dynamically updating its labeled phrase database to include new, previously unrecognized short-form phrases. When the system detects a first short-form phrase that does not initially match any entries in its existing set of labeled phrases, it may analyze the surrounding context-such as related text, user feedback, or repeated usage patterns-to infer a likely meaning. If the system determines that this inferred meaning is valid and contextually accurate, it can generate a first labeled short-form phrase that defines or expands the detected short-form. The system then updates the labeled dataset to include this new mapping by associating the first labeled short-form phrase with the original short-form phrase. This assignment effectively expands the system's knowledge base, allowing it to recognize and interpret the newly added phrase in future user interface sessions. By continuously learning from context and updating its internal references, the system becomes more robust and adaptive, improving its ability to interpret domain-specific or evolving language in real time.

At step 406, process 400 (e.g., using one or more components described above) determines a domain. For example, the system may, in response to determining that the first short-form phrase does not correspond to the one or more labeled short-form phrases, determine a first domain corresponding to one or more of the plurality of users. In response to determining that the first short-form phrase does not correspond to the one or more labeled short-form phrases, the system may attempt to resolve the ambiguity by identifying a first domain that corresponds to one or more of the users participating in the user interface session. To do this, the system analyzes user-specific data such as roles, profiles, organizational units, or prior interaction histories that suggest domain affiliation-such as cybersecurity, healthcare, finance, or customer support. For example, if a participant in the session is identified as a network administrator or an employee in an IT department, the system may infer that the relevant domain is cybersecurity or enterprise IT. This domain inference is critical because the meaning of short-form phrases often varies depending on context; for instance, "IP" could mean "Internet Protocol" in a technical domain or "Intellectual Property" in a legal domain. By determining the first domain associated with one or more users, the system narrows the interpretive scope and can more accurately evaluate or even generate a contextual label for the short-form phrase, improving the relevance and precision of system-generated content such as summaries, recommendations, or automated annotations.

In some embodiments, the system may determine the first domain corresponding to one or more of the plurality of users by determining a first user of the one or more of the plurality of users corresponds to the first audio input and determining that the first user corresponds to the first domain. For example, the system may determine the first domain corresponding to one or more of the plurality of users by first identifying which user-among those participating in the session-provided the first audio input. This may be achieved through voice identification, metadata tagging, or session-based user tracking that links spoken input to a specific user profile. Once the system determines that a first user is the source of the audio input containing the short-form phrase, it accesses stored information about that user, such as their organizational role, department, job title, or usage history, to infer their associated domain. For example, if the user is known to be a software engineer, the system may associate them with a technology or development domain; if the user is a financial analyst, the system may infer a finance domain. By establishing this connection, the system determines that the first user corresponds to the first domain, which then serves as a contextual filter for interpreting the short-form phrase. This domain-specific context allows the system to more accurately analyze, label, or expand the short-form phrase, ensuring that any generated content aligns with the professional language and expectations of the user's domain.

At step 408, process 400 (e.g., using one or more components described above) retrieves a domain profile. For example, the system may retrieve a first domain profile corresponding to the first domain. The system may retrieve a first domain profile corresponding to the first domain by using the identified domain as a key to access a structured database or knowledge repository of domain profiles. Each domain profile contains a collection of characteristics, such as domain-specific terminology, commonly used short-form phrases, contextual patterns, user roles, and communication styles associated with that domain. Once the system determines the first domain-based on user roles, session context, or input content-it queries the repository to locate the matching domain profile. For example, if the domain is identified as "cybersecurity," the system retrieves the corresponding profile that includes relevant acronyms like "IDS" (Intrusion Detection System), typical usage patterns, and language models trained on cybersecurity-related data. This retrieved profile provides the system with contextual information to interpret ambiguous inputs, detect relevant entities, and generate accurate summaries or recommendations. The domain profile acts as a contextual lens, enabling the system to tailor its understanding and output to align with the specific expectations, vocabulary, and communication norms of the identified domain.

At step 410, process 400 (e.g., using one or more components described above) generates a feature input. For example, the system may generate a first feature input corresponding to the first short-form phrase and the first domain profile. The system may generate a first feature input corresponding to the first short-form phrase and the first domain profile by combining linguistic and contextual information into a structured format suitable for model processing or classification. After detecting the first short-form phrase and retrieving the relevant first domain profile, the system extracts key attributes from both sources. From the short-form phrase, it may capture the raw text, character pattern, position in the sentence, surrounding words, and any detected formatting cues (e.g., capitalization or punctuation). From the domain profile, it gathers contextual features such as known expansions for similar phrases, domain-specific vocabulary, semantic relationships, and probability distributions for term usage. The system then encodes this combined information-both textual and contextual-into a feature vector or structured input that includes fields like "phrase text," "domain context," "co-occurring terms," and "domain-specific match confidence." This first feature input serves as the basis for further processing by classification or prediction models, allowing the system to evaluate whether the short-form phrase matches a known label, needs disambiguation, or should be added to the labeled dataset. The resulting feature input ensures that the system's interpretation is grounded in both the literal content of the phrase and the broader domain-specific context.

In some embodiments, the system may generate the first feature input by determining a second domain corresponding to a first session type of the first user interface session and retrieving a second domain profile corresponding to the second domain, wherein the first feature input is further based on the second domain. For example, the system may generate the first feature input by incorporating additional context derived from a second domain that corresponds to the first session type of the first user interface session. The system begins by identifying the session type-such as a group video meeting, technical support call, financial review, or collaborative document editing session-which provides clues about the general nature and purpose of the interaction. Based on this session type, the system determines a second domain that reflects the broader operational or conversational context; for instance, a financial review session may be linked to the finance domain, even if individual participants are from different departments. The system then retrieves a second domain profile corresponding to this second domain, containing relevant terminology, phrase usage patterns, and contextual features. When generating the first feature input for the detected short-form phrase, the system combines attributes from both the first domain profile-linked to the user's specific role-and the second domain profile-linked to the session's type. This enriches the feature input with a more comprehensive view of the linguistic and contextual landscape, improving the system's ability to accurately classify, expand, or interpret the short-form phrase. By grounding the feature input in both user-specific and session-level domains, the system enhances its adaptability and semantic precision.

In some embodiments, the system may generate the first feature input by determining a first role corresponding to one or more of the plurality of users and retrieving a second domain profile corresponding to the first role, wherein the first feature input is further based on the second domain. For example, the system may generate the first feature input by incorporating contextual information derived from the first role of one or more users participating in the user interface session. The process begins by determining the role of a user-such as engineer, project manager, financial analyst, or customer support representative-based on user metadata, profile information, or system permissions. Once the system identifies this first role, it maps it to a corresponding second domain that reflects the role's typical operational context. For example, the role of "financial analyst" may correspond to the finance domain, while "software engineer" may align with a technology or development domain. The system then retrieves a second domain profile associated with this domain, which includes role-specific terminology, short-form phrase usage, communication patterns, and contextual rules. When generating the first feature input for the detected short-form phrase, the system incorporates not only the textual characteristics of the phrase itself but also features from the second domain profile-such as expected acronym meanings or common phrases used by individuals in that role. By basing the feature input on both the phrase and the contextual relevance of the user's role, the system enhances its ability to disambiguate, classify, and interpret the phrase accurately, thereby supporting more intelligent content generation and user interaction.

In some embodiments, the system may generate the first feature input by determining a second user interface session corresponding to the first user interface session, retrieving a second text string corresponding to the second user interface session, and determining a first context for the first short-form phrase based on the second text string, wherein the first feature input is further based on the first context. For example, the system may generate the first feature input by leveraging information from a related second user interface session to enrich the contextual understanding of the first short-form phrase detected in the first user interface session. The system begins by identifying a second session that corresponds to the first-such as a prior meeting, chat thread, or collaborative session involving the same users, domain, or topic-based on session metadata, shared participants, timestamps, or referenced materials. It then retrieves a second text string from this second session, which may include transcripts, messages, notes, or other content relevant to the current discussion. The system analyzes this second text string to determine a first context for the short-form phrase by identifying surrounding terminology, themes, or previously expanded uses of similar phrases. This context may reveal, for example, that a short-form like "ML" was used in the second session to mean "machine learning," thus suggesting the same meaning in the current session. The system uses this inferred context to generate the first feature input, which combines the textual properties of the short-form phrase with contextual indicators derived from the second session. By grounding the feature input in a broader historical or collaborative context, the system enhances its ability to accurately interpret, classify, and act upon the short-form phrase within the current user interface session.

In some embodiments, the system may generate the first feature input by determining a second user interface session corresponding to the first user interface session and determining a second domain profile corresponding to the second user interface session, wherein the first feature input is further based on the second domain profile. For example, the system may generate the first feature input by identifying a second user interface session that corresponds to the first user interface session and leveraging the contextual domain knowledge associated with that second session. The system begins by analyzing metadata such as session participants, topics discussed, timestamps, or linked resources to determine a second session that is contextually related-such as a prior meeting, chat log, or collaborative document review involving similar users or subject matter. Once the corresponding second session is identified, the system infers or retrieves a second domain profile that characterizes the domain of that session. This domain profile includes structured information such as commonly used terminology, short-form phrase definitions, domain-specific acronyms, typical user roles, and communication patterns relevant to that prior session. The system then uses this domain profile to enrich the first feature input, which is being constructed to interpret a short-form phrase detected in the current session. By incorporating attributes from the second domain profile-such as likely meanings or contextual cues-the feature input becomes more robust and informed, enabling more accurate interpretation, classification, or expansion of the short-form phrase. This approach allows the system to benefit from prior domain knowledge, improving semantic understanding and enhancing real-time language processing within the ongoing session.

In some embodiments, the system may generate the first feature input by determining a first acronym corresponding to the first domain profile and determining whether the first acronym corresponds to the first short-form phrase. For example, the system may generate the first feature input by using the first domain profile to identify acronyms commonly used within that domain and then comparing them to the detected first short-form phrase. After retrieving or constructing the domain profile-based on factors such as user roles, session type, or historical usage-the system accesses a curated list of acronyms associated with that domain. It then searches this list to determine whether any first acronym matches or closely resembles the detected short-form phrase, either through exact string matching, abbreviation patterns, or semantic similarity. If a match is found, indicating that the first acronym corresponds to the first short-form phrase, the system incorporates this relationship into the first feature input. This feature input may include fields such as the short-form phrase itself, the matched acronym, the confidence score of the match, and contextual cues from the domain profile. By establishing a link between the acronym and the phrase within the domain-specific context, the system enhances its ability to accurately interpret and classify the phrase. This enriched feature input can then be used for further processing, such as determining appropriate labels, generating summaries, or improving natural language understanding within the user interface session.

In some embodiments, the system may generate the first feature input by determining a first taxonomy corresponding to the first domain profile and using the first taxonomy to determine a first context for the first short-form phrase. For example, the system may generate the first feature input by first identifying a first taxonomy that corresponds to the first domain profile. This taxonomy is a structured hierarchy or categorization of concepts, terms, and relationships specific to the domain-such as technical categories in cybersecurity, financial terms in banking, or clinical classifications in healthcare. Once the taxonomy is retrieved, the system uses it to interpret the first short-form phrase by mapping the phrase against entries within the taxonomy to identify related concepts, usage categories, or hierarchical associations. This mapping helps the system infer a first context for the short-form phrase by revealing how it fits within the domain's conceptual structure. For example, if the short-form phrase is "SOC" and the taxonomy places it under "Security Operations" within a cybersecurity domain, the system understands its likely meaning as "Security Operations Center." This contextual understanding is then encoded into the first feature input, which may include the phrase itself, its associated taxonomy node, related terms, and contextual relevance scores. By grounding the feature input in the domain's taxonomy, the system ensures that subsequent processing-such as classification, expansion, or recommendation-is semantically accurate and aligned with domain-specific expectations.

**In** some embodiments, the system may generate the first feature input by determining a first data storage location corresponding to the first domain profile and generating a knowledge base for the first model based on content from the first data storage location. For example, the system may generate the first feature input by first identifying a first data storage location that corresponds to the first domain profile. This data storage location-such as a secure server, document repository, cloud storage, or enterprise knowledge base-contains domain-specific content like technical documents, policy manuals, past conversations, or labeled datasets relevant to the domain. Once the system determines this storage location, it extracts and analyzes its content to build or update a knowledge base tailored for the first model. This knowledge base may include definitions of short-form phrases, domain-specific acronyms, contextual patterns, and relationships between terms, all structured to support interpretation and classification tasks. When generating the first feature input for a detected short-form phrase, the system draws from this knowledge base to enrich the input with contextual insights-such as likely meanings, usage examples, semantic categories, or co-occurrence frequencies. This enriched feature input is then formatted to align with the model's input schema, enabling the model to more accurately interpret and classify the short-form phrase within the domain's context. By grounding the feature input in verified, domain-relevant data, the system enhances the precision and reliability of its language understanding capabilities.

At step 412, process 400 (e.g., using one or more components described above) generates a summary based on the feature input. For example, the system may input the first feature input into a first model to determine a first labeled short-form phrase for the first short-form phrase, generate a first summary corresponding to the first user interface session based on the first labeled short-form phrase, and generate for display, on a user interface, the first summary. For example, the system may input the first feature input into a first model to determine a first labeled short-form phrase for a detected first short-form phrase by feeding the structured feature data-comprising contextual, linguistic, and domain-specific attributes-into the model's inference engine. The model, which is trained on domain-aware language patterns and short-form phrase interpretations, processes the input and outputs a labeled version of the phrase, such as expanding "API" to "Application Programming Interface" based on the surrounding context and domain profile. With the first labeled short-form phrase identified, the system incorporates it into a broader semantic understanding of the ongoing first user interface session. Using natural language generation or summarization algorithms, the system then compiles a first summary that accurately reflects the content and key points of the session, now enriched with the correctly interpreted short-form phrase. Finally, the system formats this summary for user consumption and generates it for display on a user interface-such as in a transcript pane, session recap card, or notification alert-allowing users to quickly understand and recall important session highlights with improved clarity and domain relevance.

In some embodiments, the system may train the first model by receiving a first set of parameter adjustments at a first frequency and receiving a second set of parameter adjustments at a second frequency. For example, the system may train the first model by incorporating multiple layers of parameter tuning through the receipt of a first set of parameter adjustments at a first frequency and a second set of parameter adjustments at a second frequency. The first set may represent regular, high-frequency updates based on incoming data streams, such as user interactions, session feedback, or real-time validation events. These adjustments allow the model to adapt quickly to changing patterns or terminology, especially in dynamic environments. In parallel, the second set of parameter adjustments may occur at a lower frequency and be derived from more comprehensive, curated sources-such as periodic model evaluations, human-in-the-loop reviews, or batch retraining using larger labeled datasets. These lower-frequency updates ensure the model maintains long-term stability, accuracy, and alignment with evolving domain knowledge. By managing both high-frequency, fine-tuning updates and lower-frequency, structural adjustments, the system supports a balanced training strategy that allows the first model to remain both responsive to immediate usage trends and grounded in foundational knowledge, improving its performance over time.

It is contemplated that the steps or descriptions of FIG. 4 may be used with any other embodiment of this disclosure. In addition, the steps and descriptions described in relation to FIG. 4 may be done in alternative orders or in parallel to further the purposes of this disclosure. For example, each of these steps may be performed in any order, in parallel, or simultaneously to reduce lag or increase the speed of the system or method. Furthermore, it should be noted that any of the components, devices, or equipment discussed in relation to the figures above could be used to perform one or more of the steps in FIG. 4.

The above-described embodiments of the present disclosure are presented for purposes of illustration and not of limitation, and the present disclosure is limited only by the claims which follow. Furthermore, it should be noted that the features and limitations described in any one embodiment may be applied to any embodiment herein, and flowcharts or examples relating to one embodiment may be combined with any other embodiment in a suitable manner, done in different orders, or done in parallel. In addition, the systems and methods described herein may be performed in real time. It should also be noted that the systems and/or methods described above may be applied to, or used in accordance with, other systems and/or methods.

The present techniques will be better understood with reference to the following enumerated embodiments:
1. A method for implementing a knowledge sharing engine based on speech signal processing during user interface sessions.
2. The method of any one of the preceding embodiments, further comprising: receiving a first audio input during a first user interface session between a plurality of users; generating a first text string based on the first audio input; parsing the first text string to detect a first short-form phrase; in response to detecting the first short-form phrase, determining whether the first short-form phrase corresponds to one or more labeled short-form phrases; in response to determining that the first short-form phrase does not correspond to the one or more labeled short-form phrases, determining a first domain corresponding to one or more of the plurality of users; retrieving a first domain profile corresponding to the first domain; generating a first feature input corresponding to the first short-form phrase and the first domain profile; inputting the first feature input into a first model to determine a first labeled short-form phrase for the first short-form phrase; generating a first summary corresponding to the first user interface session based on the first labeled short-form phrase; and generating for display, on a user interface, the first summary.
3. The method of any one of the preceding embodiments, wherein generating the first feature input further comprises: determining a second domain corresponding to a first session type of the first user interface session; and retrieving a second domain profile corresponding to the second domain, wherein the first feature input is further based on the second domain.
4. The method of any one of the preceding embodiments, wherein generating the first feature input further comprises: determining a first role corresponding to one or more of the plurality of users; and retrieving a second domain profile corresponding to the first role, wherein the first feature input is further based on the second domain.
5. The method of any one of the preceding embodiments, wherein generating the first feature input further comprises: determining a second user interface session corresponding to the first user interface session; retrieving a second text string corresponding to the second user interface session; and determining a first context for the first short-form phrase based on the second text string, wherein the first feature input is further based on the first context.
6. The method of any one of the preceding embodiments, wherein generating the first feature input further comprises: determining a second user interface session corresponding to the first user interface session; and determining a second domain profile corresponding to the second user interface session, wherein the first feature input is further based on the second domain profile.
7. The method of any one of the preceding embodiments, wherein determining whether the first short-form phrase corresponds to the one or more labeled short-form phrases further comprising: parsing a second text string to detect a second short-form phrase; determining whether the second short-form phrase corresponds to the first short-form phrase; and in response to determining that the second short-form phrase corresponds to the first short-form phrase, determining whether the second short-form phrase corresponds to the one or more labeled short-form phrases.
8. The method of any one of the preceding embodiments, wherein determining whether the first short-form phrase corresponds to the one or more labeled short-form phrases further comprising: parsing a second text string to detect a context for the first short-form phrase; generating a contextual short-form phrase based on the second text string and the first short-form phrase; and determining whether the contextual short-form phrase corresponds to the one or more labeled short-form phrases.
9. The method of any one of the preceding embodiments, wherein determining whether the first short-form phrase corresponds to the one or more labeled short-form phrases further comprising: parsing a second text string to detect a context for the first short-form phrase; generating a contextual short-form phrase based on the second text string and the first short-form phrase; and determining whether the contextual short-form phrase corresponds to the one or more labeled short-form phrases.
10. The method of any one of the preceding embodiments, wherein determining whether the first short-form phrase corresponds to the one or more labeled short-form phrases further comprising: determining a first relevance of the first short-form phrase to the first user interface session; comparing the first relevance to a threshold relevance; and determining to compare the first short-form phrase corresponds to the one or more labeled short-form phrases based on the first relevance to the threshold relevance.
11. The method of any one of the preceding embodiments, wherein determining the first labeled short-form phrase for the first short-form phrase further comprises: updating the one or more labeled short-form phrases to include the first labeled short-form phrase; and assigning the first labeled short-form phrase to the first short-form phrase.
12. The method of any one of the preceding embodiments, wherein determining the first domain corresponding to one or more of the plurality of users further comprises: determining a first user of the one or more of the plurality of users corresponds to the first audio input; and determining that the first user corresponds to the first domain.
13. The method of any one of the preceding embodiments, wherein the first model is trained by: receiving a first set of parameter adjustments at a first frequency; and receiving a second set of parameter adjustments at a second frequency.
14. The method of any one of the preceding embodiments, wherein generating the first feature input corresponding to the first short-form phrase and the first domain profile further comprises: determining a first acronym corresponding to the first domain profile; and determining whether the first acronym corresponds to the first short-form phrase.
15. The method of any one of the preceding embodiments, wherein generating the first feature input corresponding to the first short-form phrase and the first domain profile further comprises: determining a first taxonomy corresponding to the first domain profile; and using the first taxonomy to determine a first context for the first short-form phrase.
16. The method of any one of the preceding embodiments, wherein generating the first feature input corresponding to the first short-form phrase and the first domain profile further comprises: determining a first data storage location corresponding to the first domain profile; and generating a knowledge base for the first model based on content from the first data storage location.
17. One or more non-transitory, computer-readable mediums storing instructions that, when executed by a data processing apparatus, cause the data processing apparatus to perform operations comprising those of any of embodiments 1-16.
18. A system comprising one or more processors; and memory storing instructions that, when executed by the processors, cause the processors to effectuate operations comprising those of any of embodiments 1-16.
19. A system comprising means for performing any of embodiments 1-16.

## Claims

1. A system for implementing a knowledge sharing engine based on speech signal processing during user interface sessions, the system comprising:
one or more processors; and
one or more non-transitory, computer-readable media comprising instructions that, when executed by the one or more processors, cause operations comprising:
receiving a first audio input during a first user interface session between a plurality of users;
generating a first text string based applying a first speech signal processing algorithm to the first audio input;
parsing the first text string to detect a first linguistic acronym;
in response to detecting the first linguistic acronym, determining whether the first linguistic acronym corresponds to one or more labeled linguistic acronyms;
in response to determining that the first linguistic acronym does not correspond to the one or more labeled linguistic acronyms:
determining a first domain corresponding to one or more of the plurality of users;
determining a second domain corresponding to a first session type of the first user interface session;
retrieving a first domain profile corresponding to the first domain;
retrieving a second domain profile corresponding to the second domain;
generating a first summary corresponding to the first user interface session based on a first labeled linguistic acronym, wherein the first labeled linguistic acronym is determined by processing the first linguistic acronym, the first domain profile, and the second domain profile in a model; and
causing display, on a user interface, of the first summary.

2. A method for implementing a knowledge sharing engine based on speech signal processing during user interface sessions, the method comprising:
parsing a first text string to detect a first short-form phrase, wherein the first text string is based on a first audio input received during a first user interface session between a plurality of users;
in response to determining that the first short-form phrase does not correspond to one or more labeled short-form phrases, obtaining a first domain corresponding to one or more of the plurality of users;
retrieving a first domain profile corresponding to the first domain;
generating a first summary corresponding to the first user interface session based on a first labeled short-form phrase, wherein the first labeled short-form phrase is determined based on the first short-form phrase; and
causing display, on a user interface, of the first summary.

3. The method of claim 2, wherein the first labeled short-form phrase is further based on:
(a) determining a second domain corresponding to a first session type of the first user interface session; and retrieving a second domain profile corresponding to the second domain; and/or
(b) determining a first role corresponding to one or more of the plurality of users; and retrieving a second domain profile corresponding to the first role; and/or
(c) determining a second user interface session corresponding to the first user interface session; retrieving a second text string corresponding to the second user interface session; and determining a first context for the first short-form phrase based on the second text string; and/or
(d) determining a second user interface session corresponding to the first user interface session; and determining a second domain profile corresponding to the second user interface session.

4. The method of claim 2 or 3, wherein determining whether the first short-form phrase corresponds to the one or more labeled short-form phrases further comprising:
parsing a second text string to detect a second short-form phrase;
determining whether the second short-form phrase corresponds to the first short-form phrase; and
in response to determining that the second short-form phrase corresponds to the first short-form phrase, determining whether the second short-form phrase corresponds to the one or more labeled short-form phrases.

5. The method of any one of claims 2 to 4, wherein determining whether the first short-form phrase corresponds to the one or more labeled short-form phrases further comprising:
parsing a second text string to detect a context for the first short-form phrase;
generating a contextual short-form phrase based on the second text string and the first short-form phrase; and
determining whether the contextual short-form phrase corresponds to the one or more labeled short-form phrases.

6. The method of any one of claims 2 to 5, wherein determining whether the first short-form phrase corresponds to the one or more labeled short-form phrases further comprising:
parsing a second text string to detect a context for the first short-form phrase;
generating a contextual short-form phrase based on the second text string and the first short-form phrase; and
determining whether the contextual short-form phrase corresponds to the one or more labeled short-form phrases.

7. The method of any one of claims 2 to 6, wherein determining whether the first short-form phrase corresponds to the one or more labeled short-form phrases further comprising:
determining a first relevance of the first short-form phrase to the first user interface session;
comparing the first relevance to a threshold relevance; and
determining to compare the first short-form phrase corresponds to the one or more labeled short-form phrases based on the first relevance to the threshold relevance.

8. The method of any one of claims 2 to 7, wherein determining the first labeled short-form phrase for the first short-form phrase further comprises:
updating the one or more labeled short-form phrases to include the first labeled short-form phrase; and
assigning the first labeled short-form phrase to the first short-form phrase.

9. The method of any one of claims 2 to 8, wherein determining the first domain corresponding to one or more of the plurality of users further comprises:
determining a first user of the one or more of the plurality of users corresponds to the first audio input; and
determining that the first user corresponds to the first domain.

10. The method of any one of claims 2 to 9, wherein the first labeled short-form phrase is determined based on the first short-form phrase using a model, wherein the model is trained by:
receiving a first set of parameter adjustments at a first frequency; and
receiving a second set of parameter adjustments at a second frequency.

11. The method of any one of claims 2 to 10, wherein the first labeled short-form phrase is further based on:
(a) determining a first acronym corresponding to the first domain profile; and determining whether the first acronym corresponds to the first short-form phrase; and/or
(b) determining a first taxonomy corresponding to the first domain profile; and using the first taxonomy to determine a first context for the first short-form phrase; and/or
(c) determining a first data storage location corresponding to the first domain profile; and generating a knowledge base for a model based on content from the first data storage location.

12. One or more non-transitory, computer-readable media, comprising instructions that, when executed by one or more processors, cause operations comprising:
detecting a first short-form phrase;
in response to detecting the first short-form phrase, determining whether the first short-form phrase corresponds to one or more labeled short-form phrases;
in response to determining that the first short-form phrase does not correspond to the one or more labeled short-form phrases, determining a first domain corresponding to one or more of a plurality of users;
retrieving a first domain profile corresponding to the first domain;
generating a first summary corresponding to a user interface session based on a first labeled short-form phrase, wherein the first labeled short-form phrase is determined based on the first labeled short-form phrase for the first short-form phrase; and
causing display, on a user interface, of the first summary.

13. The one or more non-transitory, computer-readable media of claim 12, wherein determining the first labeled short-form phrase for the first short-form phrase further comprises:
updating the one or more labeled short-form phrases to include the first labeled short-form phrase; and
assigning the first labeled short-form phrase to the first short-form phrase.

14. The one or more non-transitory, computer-readable media of claim 12 or 13, wherein determining the first domain corresponding to one or more of the plurality of users further comprises:
determining a first user of the one or more of the plurality of users corresponds to a first audio input; and
determining that the first user corresponds to the first domain.

15. The one or more non-transitory, computer-readable media of any one of claims 12 to 14, wherein the first labeled short-form phrase is determined based on the first short-form phrase using a model, wherein the model is trained by:
receiving a first set of parameter adjustments at a first frequency; and
receiving a second set of parameter adjustments at a second frequency.
